# EUROPEAN PATENT APPLICATION

(11) **EP 2 574 108 A1**
(43) Date of publication of application: **27.03.2013**
(21) Application number: 11783536.3
(22) Date of filing: 17.05.2011
(51) Int. Cl.: H04W 40/02, H04W 40/34

(54) **DATA COMMUNICATION DEVICE**

(30) Priority: 18.05.2010 JP 2010114209
(71) Applicant: NEC Corporation, Tokyo 108-8001 (JP)
(72) Inventor: NAKAO Yoshitaka, Tokyo 108-8001 (JP); NAKAJIMA Hiroaki, Tokyo 108-8001 (JP); SONOBE Satoshi, Tokyo 108-8001 (JP); KANAYA Fumiya, Tokyo 108-0073 (JP); MUTO Hideyuki, Tokyo 108-8001 (JP)
(74) Representative: Glawe, Delfs, Moll
(86) International application number: PCT/JP2011/061289
(87) International publication number: WO 2011/145602

(57) **Abstract**

In a wireless communication network, a data communication device includes a wireless monitoring device, a path cost control device, and a communication path control device, thus functioning as a Layer 2 switch. Due to an increase of path costs in wireless areas, the path control device recalculates path costs over a network so as to carry out switching to an appropriate data communication path. For example, a data communication path is switched to run through a LAN while blocking a wireless line. Hereafter, when a wireless band is recovered due to an AMR function, the wireless monitoring device sends a path cost change request to the path cost control device, which in turn reduces a path cost at a wireless line port. Additionally, the communication path control device recalculates path costs over a network so as to switch over data communication paths. Thus, it is possible to select an optimum data communication path with a low cost.

## Description

### TECHNICAL FIELD

The present invention relates to a data communication device having an AMR (Adaptive Modulation Radio) function in a wireless communication network.
The present application claims priority on Japanese Patent Application No. 2010-114209 filed May 18, 2010, the entire content of which is incorporated herein by reference.

### BACKGROUND ART

Recently, data communication devices having an AMR function have been developed. Due to the activation of an AMR function, even when a wireless communication network undergoes a reduction of bands in wireless areas, data communication devices are able to continue data communication via wireless paths with reduced bands irrespective of the presence of redundant communication paths. This is because conventional data communication devices include a path control means implementing path switching on link disconnection, but they do not carry out path switching solely due to a variation of bands.

However, unlike wired devices, wireless devices do not cause link disconnection and therefore undergo a dynamic variation of wireless bands; hence, in order to implement switching from a wireless area undergoing a reduction of wireless bands to a wireless path having other redundant bands, it is necessary to carry out path switching on a variation of wireless bands other than path switching on link disconnection.

When path control is implemented by simply allocating a path cost for each wireless band, path switching may occur every time an AMR function is activated, which may cause a problem in that temporary band compression and frame loss may frequently occur due to FDB (forwarding Data-Base) flush.

Patent Literature 1 discloses a wireless communication technology in which during execution of communication between a wireless communication device (MN: Mobile Node) and an IP telephone terminal via a switching server in a wireless IP network, the wireless communication device and the switching server monitor their conditions of bands based on received packets from the wireless IP network, thus detecting a narrowband status.

Patent Literature 2 discloses a path selecting technology regarding a network including devices (e.g. bridges) implementing a patch control protocol (STP: Spanning Tree Protocol) for automatically calculating a cost based on a physical band of a connected link. In this network, a relay device (e.g. a transmission device or a tunnel device), interposed between devices such as bridges, receives and transmits measurement frames so as to measure bands for the WAN (Wide Area Network). It is possible to select an optimum path reflecting the cost of bottleneck bands in consideration of a variation of WAN bands or linkup speed which differs from the bottleneck band.

Patent Literature 3 discloses a technology for dynamically selecting an optimum path with a descriptive parser periodically obtaining an environmental description (e.g. network operating characteristics such as costs, bandwidths, availability, and capacities in a plurality of networks). The environmental description is analyzed by a schemer and delivered to an objective function evaluator as an analyzed environmental description (e.g. cost parameters describing network characteristics). Using the required bandwidth and the analyzed environmental description, the objective function evaluator controls switches so as to select a path and an optimum network from among a plurality of networks, thus dynamically selecting an optimum path.

### CITATION LIST

### PATENT LITERATURE

Patent Literature 1: Japanese Patent Application Publication No. 2008-167026
Patent Literature 2: Japanese Patent Application Publication No. 2008-219690
Patent Literature 3: Japanese Patent Application Publication No. 2005-518716

### SUMMARY OF INVENTION

### TECHNICAL PROBLEM

As described above, when a reduction of bands occurs in wireless areas, a data communication device having an AMR function does not switch to redundant communication paths irrespective of the presence of redundant communication paths but continues data communication via wireless paths undergoing a reduction of bands. This may cause a problem in that wireless areas undergoing a reduction of bands may discard data, thus causing a reduction of data communication efficiency, and degradation of communication quality. Unlike a wired device, a wireless device does not cause link disconnection and therefore may undergo a dynamic variation of wireless bands. For this reason, in order to implement switching from wireless areas undergoing a reduction of wireless bands to communication paths having the other redundant bands, it is necessary to implement path switching on a variation of wireless bands other than path switching on link disconnection.

When path control is carried out by simply allocating a cost for each wireless band, patch switching may occur every time an AMR function is activated, which in turn causes a problem in that temporary band compression and frame loss may frequently occur due to FDB flush.

### SOLUTION TO PROBLEM

It is an object of the present invention to provide a data communication device which is able to suppress frame loss in association with an AMR function, which is activated between wireless areas in a wireless communication network so as to cause a variation of bands, thus selecting an optimum communication path at a low cost.
It is another object of the present invention to provide a control method and a computer program for the above data communication device.

In order to solve the foregoing problems, the present invention includes a wireless monitoring device for monitoring wireless bands and flow rates in wireless areas, and a path cost control device handling a change of a path cost, thus achieving a selection of paths depending on a variation of bands in wireless areas.
The present invention is designed to connect a plurality of data communication devices via a first path having a wireless area but is able to switch the first path, buffering inconvenience, to a second path (not depending on the presence/absence of a wireless area).

Specifically, it is necessary to provide a communication path selecting means, undergoing a reduction of bands in wireless areas due to activation of an AMR function, and to monitor flow rates and bands for wireless areas, thus dynamically changing (or recalculating) a path cost in wireless areas based on a monitoring result. Additionally, it is necessary to dynamically select communication paths based on the recalculated path cost. By setting a predetermined threshold as a trigger for changing a path cost, it is possible to prevent an event in which path switching may occur multiple times in a short period of time.

The technologies disclosed in Patent Literatures 1 to 3 may partially overlap with the technical field of the present invention, but they do not match the entirely configuration. Additionally, the present invention is made in consideration of the foregoing problems so as to provide a data communication device which is able to suppress frame loss in association with an AMR function, which is activated to change bands in wireless areas, thus selecting an optimum communication path with a low cost.

The present invention relates to a data communication device, which carries out path switching depending on a path cost in a wireless communication network, and which includes a first path cost changing device that changes the current path cost with a first path cost, which is determined in advance for each wireless area discarding data, in a traffic change mode for changing a path cost triggered by discarding data in any wireless area, and a second path cost changing device that changes the current path cost with a second path cost, which is determined in advance, in a band change mode for changing a path cost triggered by a variation of wireless bands.

The present invention relates to a control method for a data communication device implementing path switching depending on a path cost, including the steps of: setting either a traffic change mode for changing a path cost triggered by discarding data in any wireless area and a band change mode for changing a path cost triggered by a variation of wireless bands; changing the current path cost to a first path cost, which is determined in advance for each wireless area discarding data, in the traffic change mode; and changing the current path cost to a second path cost, which is determined in advance, in the band change mode.

The present invention is directed to a computer program describing the above control method for the data communication device.

### ADVANTAGEOUS EFFECTS OF INTENTION

With the setting of a traffic change mode, for example, a data communication device is able to prevent its path cost from being frequently changed even when an AMR function is frequently activated due to unstable weather. Additionally, it is possible to flexibly set a path cost depending on the amount of communication data and wireless areas because each wireless band can be set at any path cost, which should be changed upon discarding data. For this reason, it is possible to change a path cost upon discarding data even when a variation pattern for the amount of data communication cannot be predicted; hence, it is unnecessary to predict traffic in advance, thus achieving a path cost changing process with a low cost.
With the setting of the band change mode, it is possible to minimize the occurrence of communication path switching due to a change of a path cost.

### BRIEF DESCRIPTION OF DRAWINGS

[Fig. 1] A configuration diagram showing the entire configuration of a data communication system including a data communication device according to an embodiment of the present invention.
[Fig. 2] A sequence diagram showing an example of communication procedures in the data communication system.
[Fig. 3A] A flowchart showing a path cost changing process triggered by discarding data flowing through any wireless line in a traffic change mode.
[Fig. 3B] A flowchart showing a path cost changing process triggered by a variation of wireless bands in the traffic change mode.
[Fig. 4] A flowchart showing a path cost changing process triggered by a variation of wireless bands in a band change mode.
[Fig. 5A] A figure showing a table describing path costs which are set with respect to wireless bands and which are referred to in the traffic change mode.
[Fig. 5B] a figure showing a table describing path costs which are set with respect to a minimum guaranteed band and a recovery band and which are referred to in the band change mode.
[Fig. 6] A diagram showing the configuration of a data communication system connecting data communication devices via a plurality of wireless areas.

### DESCRIPTION OF EMBODIMENT

A data communication device according to an embodiment of the present invention is designed to carry out path control in association with an AMR (Adaptive Modulation Radio) function. Specifically, it includes a wireless monitoring device for monitoring wireless bands and flow rates in wireless areas, and path cost control device adaptive to a change of a path cost, thus achieving a selection of paths depending on a variation of bands in wireless areas.

The present invention solves the foregoing problems by implementing data communication control via STP (Spanning Tree Protocol) associating with an AMR function. Specifically, a wireless monitoring device for monitoring wireless bands and flow rates in wireless areas, and a path cost control for dynamically changing path costs in wireless areas are arranged inside a switch. In general, path costs are used for determination of data communication paths according to path control protocols such as STP.

The present invention dynamically changes path costs in connection with an AMR function causing a variation of bands in wireless areas so as to select highly efficient data communication paths depending on communication conditions of networks, thus preventing data from being unnecessarily discarded.
Additionally, it is possible to prevent the frequent occurrence of path switching by implementing a mode for changing path costs depending on networks adapted to wireless communication. As a result, it is possible to prevent a reduction of efficiency of data communication and degradation of communication quality with a low cost.

A data communication system, a data communication device, a control method for a data communication device, and a computer program according to an embodiment of the present invention will be described in detail with reference to the accompanying drawings.

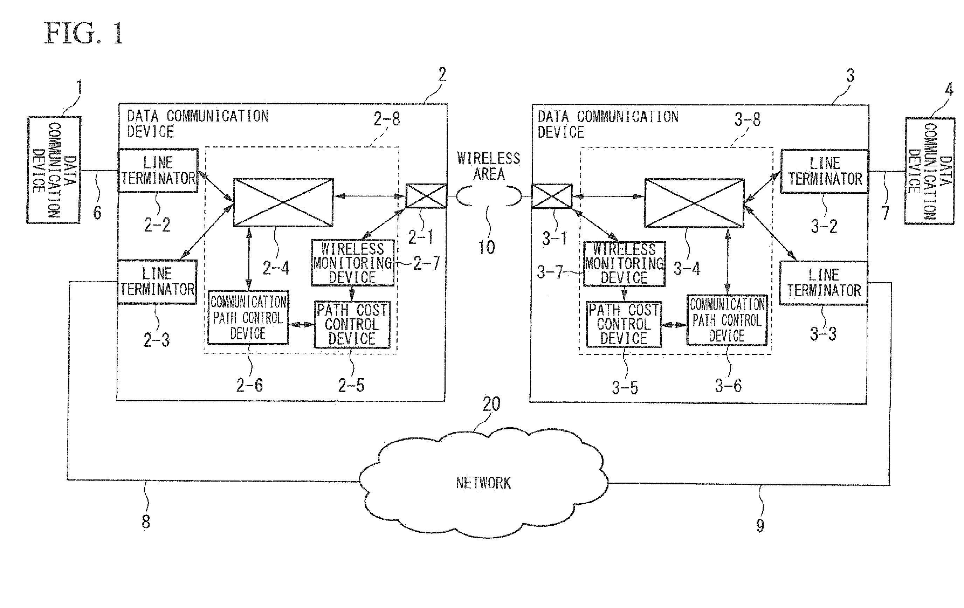

Fig. 1 is a configuration diagram showing the entire configuration of a data communication system according to an embodiment of the present invention. The data communication system may include a plurality of data communications devices.
The data communication system shown in Fig. 1 includes data communication devices 1 to 4 serving as Layer 2 switches (L2SW). The data communication device 2 includes a switch 2-8, line terminators 2-2, 2-3, and a wireless terminator (a wireless line port) 2-1. The switch 2-8 includes a switch core 2-4 having a function of switching frames, a path cost control device 2-5, a communication path control device 2-6 for selecting paths based on the STP, and a wireless monitoring device 2-7 having a characteristic function of the present embodiment.

The data communication device 3 includes a switch 3-8, line terminators 3-2, 3-3, and a wireless terminator (a wireless line port) 3-1. The switch 3-8 includes a switch core 3-4 having a function of switching frames, a path cost control device 3-5, a communication path control device 3-6 for selecting paths based on the STP, and a wireless monitoring device 3-7 having a characteristic function of the present embodiment.
The data communication devices 1-4 are connected to lines 6-10 via a network 20.

The data communication system and the data communication devices 1-4 shown in Fig. 1 will be described in detail. The data communication devices 2, 3 serving as Layer 2 switches (L2SW) are network relaying devices mainly aiming to operate as Layer 2 terminators. The data communication devices 2, 3 are mutually connected to each other via the wireless line (wireless area) 10. The data communication device 1 is an L2SW connected to the data communication device 2 via the line 6, whilst the data communication device 4 is an L2SW connected to the data communication device 3 via the line 7. The network 20 having redundant paths in wireless areas is connected to the data communication device 2 via the line 8 and connected to the data communication device 3 via the line 9.

The wireless monitoring devices 2-7, 3-7 detect a variation of wireless bands and discarded data flowing between wireless areas due to an AMR function so as to send communications to the path cost control devices 2-5, 3-5. Upon receiving communications from the wireless monitoring devices 2-7, 3-7, the path cost control devices 2-5, 3-5 decrease or increase path costs in wireless areas. The communication path control devices 2-6, 3-6 select appropriate data communication paths on the network 20 based on path costs for a plurality of lines.

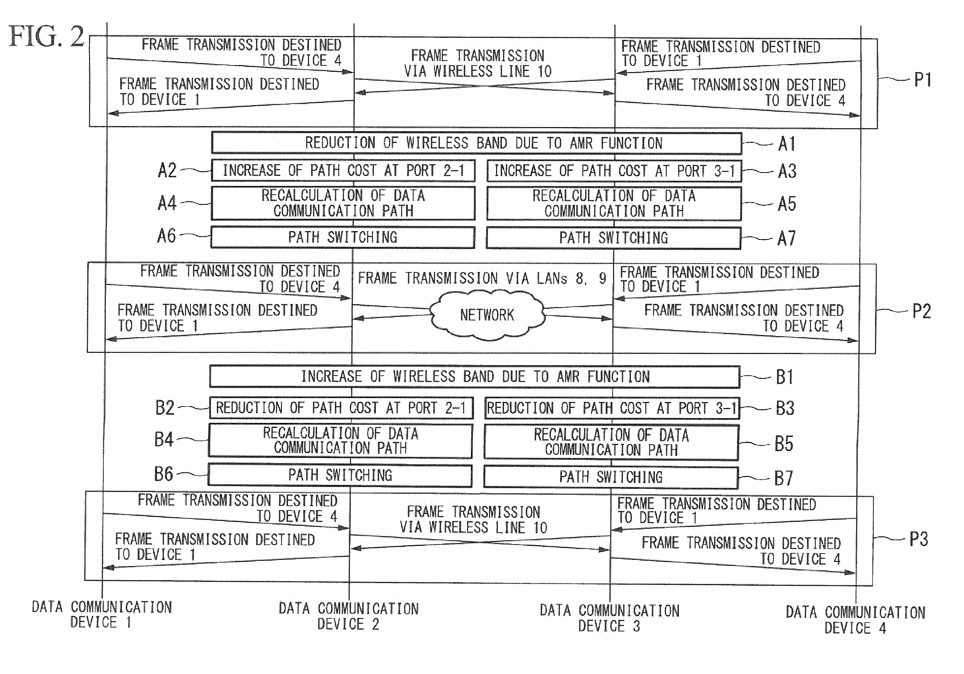

Fig. 2 is a sequence diagram showing an example of communication procedures in the data communication system. Fig. 2 shows a basic sequence of communication path control associating with an AMR function, illustrating the operation of the data communication devices 1-4 over time which elapses in a direction from the upper part to the lower part. Herein, P1, P2, and P3 denote flows of frames in the data communication devices 1-4.

First, a path control sequence due to activation of an AMR function in a wireless area between the data communication devices 2, 3 will be described.
In a normal mode in which bidirectional communication is carried out between the data communication devices 1, 4, mutual transmission of frames is implemented via the wireless area of the wireless line 10 (step P1). At this time, with a reduction of wireless bands due to an AMR function (step A1), the wireless monitoring devices 2-7, 3-7 of the data communication devices 2, 3 request the path cost control devices 2-5, 3-5 to change path costs. Upon receiving requests, the path cost control devices 2-5, 3-5 increase path costs at the wireless line ports 2-1, 3-1 (steps A2, A3).

Due to the increased path costs, the communication path control devices 2-6, 3-6 recalculate path costs over the network 20 (steps A4, A5) so as to change data communication paths when appropriate communication paths are found (steps A6, A7). The present embodiment blocks off the wireless line 10 while switching to communication paths running through the LANs 8, 9 (step P2).

Thereafter, when the wireless area is recovered due to an AMR function (step B1), the wireless monitoring devices 2-7, 3-7 of the data communication devices 2,3 3 request the path cost control devices 2-5, 3-5 again to change path costs. Upon receiving request, the path const control devices 2-5, 3-5 decrease the increased path costs at the wireless line ports 2-1,3-1 (steps B2, B3). The communication path control devices 2-6, 3-6 recalculate path costs over the network 20 (steps B4, B5) so as to change data communication paths (steps B6, B7). The present embodiment releases the blocking of the wireless line 10 while switching to communication paths running through the wireless line 10 again (step P3).

In this connection, a certain mode is set to the data communication devices 2, 3; hence, the sequence diagram of Fig. 2 shows the communication procedure with the setting of a "band change mode".
The present embodiment is able to set two modes, i.e. a "traffic change mode" and a "band change mode", in relation to a trigger for changing path costs.

### (1) Traffic Change Mode

This mode changes a path cost triggered by discarding data in traffic flowing through the wireless line 10.

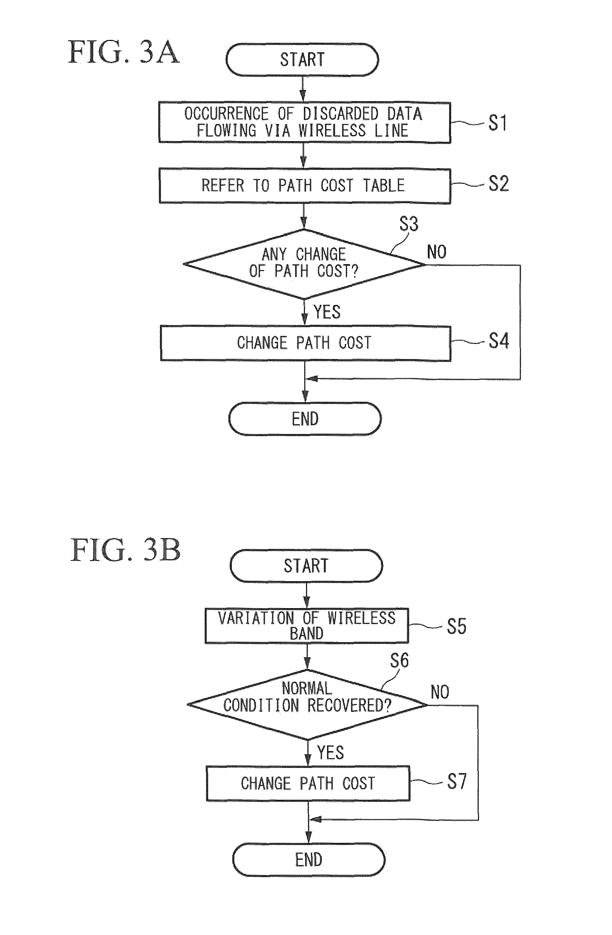

Figs. 3A and 3B are flowcharts showing a path cost changing process of the data communication devices 2, 3 in the traffic change mode.
Upon detecting discarded data in the wireless area, the wireless monitoring devices 2-7, 3-7 notify discarding events to the path cost control devices 2-5, 3-5 (step S1). The path cost control devices 2-5, 3-5 refers to a table setting path costs for wireless areas (step S2) and then compares the current path cost to the path cost which is read from the table in relation to the current wireless band (step S3).

When the current path cost differs from the path cost of the table, the path cost control devices 2-5, 3-5 changes the current path cost with the path cost of the table (step S4). When the current path cost matches the path cost of the table, they exit the path cost changing process without changing the path cost.

On the other hand, when the wireless monitoring devices 2-7, 3-7 detect a variation of wireless bands due to an AMR function (step S5), they subsequently determine whether or not the normal condition is recovered (step S6). When the normal condition is recovered, the wireless monitoring devices 2-7, 3-7 send a path cost change request to the path cost control devices 2-5, 3-5, thus changing the current path cost (step S7). When the normal condition is not recovered, they exit the path cost changing process without issuing a path cost change request.

### (2) Band Change Mode

This mode changes a path cost triggered by a variation of wireless bands.

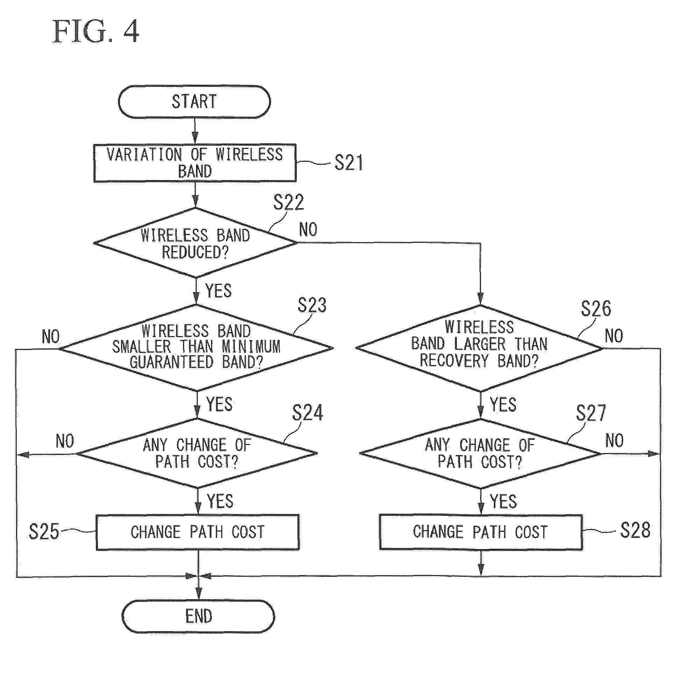

Fig. 4 is a flowchart showing a path cost changing process of the data communication devices 2, 3 in the band change mode.
When the wireless monitoring devices 2-7, 3-7 detect a variation of wireless bands (step S21), they determine whether or not a reduction of wireless bands occurs (step S22). Upon detecting a reduction of wireless bands, they subsequently determine whether or not the wireless band is smaller than the minimum guaranteed band (step S23). The flow proceeds to step S24 when the wireless band is smaller than the minimum guaranteed band, whilst the path cost changing process is ended without doing anything when the wireless band is larger than the minimum guaranteed band.

In step S24, the path cost control devices 2-5, 3-5 compare the current path cost to the path cost of the table. The flow proceeds to step S25 when they differ from each other, wherein the current path cost is changed with the path cost of the table. The path cost changing process is ended without doing anything when the current path cost matches the path cost of the table.

When the wireless band increases, the wireless monitoring devices 2-7, 3-7 determine whether or not the wireless band is larger than the recovery band (step S26). The flow proceeds to step S27 when the wireless band is larger than the recovery band, whilst the path cost changing process is ended without doing anything when the wireless band is smaller than the recovery band.
In step S27, the path cost control devices 2-5, 3-5 compare the current path cost to the path cost of the table. When they differ from each other, the flow proceeds to step S28 so as to change the current path cost with the path cost of the table. The path cost changing process is ended without doing anything when the current path cost matches the path cost of the table.

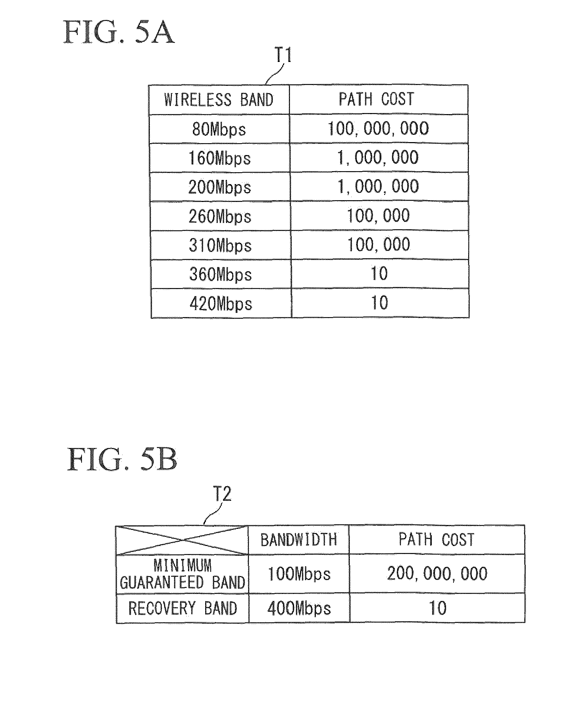

Figs. 5A and 5B show examples of tables which are referred to in the traffic change mode and the band change mode. Fig. 5A shows a table T1, which is referred to in the traffic change mode and in which an administrator is allowed to arbitrarily set path costs for wireless bands. Herein, path costs are each set to "10" when data is discarded in wireless bands of 420 Mbps, 360 Mbps. Additionally, path costs are each set to "100,000" when data is discarded in wireless bands of 260 Mbps, 310 Mbps. Moreover, path costs are each set to "1,000,000" when data is discarded in wireless bands 200 Mbps, 160 Mbps. A path cost is set to "100,000,00" when data is discarded in a wireless band of 80 Mbps.

The traffic change mode will not change a path cost when the amount of communication data is smaller than that in a certain wireless band, that is, when no data is discarded. Additionally, it will not recover a path cost unless a certain wireless band is not recovered to a normal wireless band. Therefore, it is possible to prevent path costs from being frequently changed irrespective of the frequent activation of an AMR function due to unstable weather. As a result, it is possible to reduce the umber of times FDB flush may occur due to switching of communication paths, to present unnecessary flooding, and to prevent communication loss.

Additionally, it is possible to flexibly set path costs considering the relationship between the amount of communication data and wireless bands because an administrator is allowed to set path costs for wireless bands, which should be changed when data is discarded. Thus, it is possible to change path costs when data is discarded even when a variation pattern for the amount of communication data cannot be predicted; hence, it is unnecessary to predict traffic in advance, and it is therefore possible to achieve a path cost changing process with a low cost.

Fig. 5B shows a table T2, which is referred to in the band change mode and in which an administrator is allowed to set path costs with respect to a minimum guaranteed band and a recovery band. Herein, the minimum guaranteed band is set to 100 Mbps, whilst the recovery band is set to 400 Mbps. With the table T2, it is possible to change a path cost at "200,000,000" reflecting a bandwidth lower than 100 Mbps in a reduced wireless band due to the activation of an AMR function. On the other hand, it is possible to change a path cost at "10" reflecting a bandwidth higher than 400 Mbps in an increased wireless band.
In the band change mode, an administrator is allowed to solely set the minimum guaranteed band and the recovery band, thus minimally changing path costs. This approach may demonstrate its effect in the redundant configuration in which a plurality of data communication devices is connected via a plurality of wireless lines.

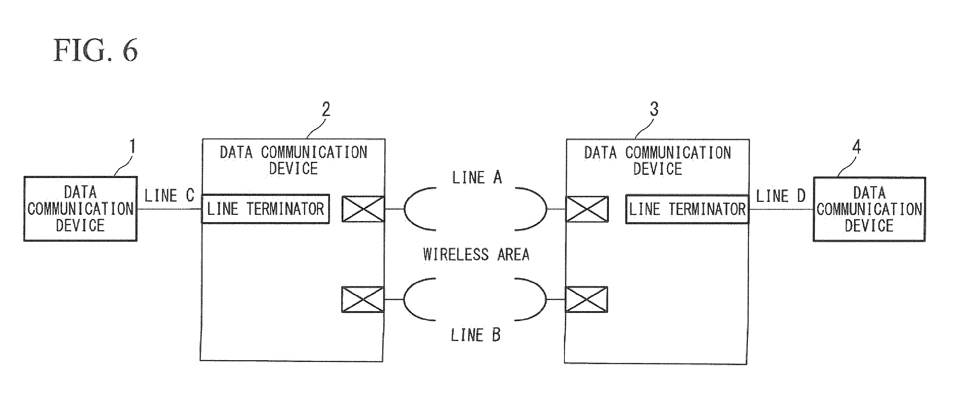

Fig. 6 shows the configuration of a data communication system in which the data communication devices 2, 3 are connected together via a plurality of wireless areas (lines A, B). An AMR function is activated due to variation of weather; therefore, an AMR function may be activated concurrently in two wireless areas in the data communication system shown in Fig. 6.
Despite the setting of a path cost for each wireless line, the line A may undergo a variation of its wireless band due to activation of an AMR function. At this time, there is a possibility of reciprocally performing path switching control in such a way that after a communication path is switched to the line B by changing the path cost, a path cost for the line B may be changed due to activation of an AMR function, thereafter, the communication path will be switched to the line A again.

To prevent a phenomenon in which communication paths are switched over multiple times in a short period of time, it is necessary to set two thresholds for changing path costs, namely the minimum guaranteed band and the recovery band, in the band change mode. Thus, it is possible to minimize the occurrence of path switching due to a change of path costs. As a result, it is possible to prevent the number of times the FDB flush occurs upon path switching, to prevent unnecessary flooding, and to prevent communication loss.

Apparently, it is easy to install the band change mode, which is characterized by preventing path switching until the current wireless band reaches the minimum guaranteed band, in communication services; hence, it is easy to provide services to customers. The data communication system and the data communication device according to the present embodiment produce an effect of selecting paths while tracking a variation of wireless bands not causing link disconnection.

The present embodiment produces an effect of preventing the occurrence of unnecessary path switching because it determines whether or not switching to redundant paths should be carried out through monitoring wireless bands and flow rates in wireless areas. As a result, it is possible to prevent communication loss and temporary band compression due to FDB flushing without frequently performing an operation of selecting paths.
Additionally, it is possible to change path costs triggered by discarding data; therefore, it is possible to dynamically select paths depending on traffic even when a variation of traffic cannot be predicted.
Moreover, it is possible to select paths considering the entirety of a network because it is not necessary to adopt a unique path switching method but to employ the existing path control protocol; therefore, it is easy to newly implement the functionality of the present invention in the existing network.

The foregoing embodiment employs a path control means based on the STP; but this is not a restriction. As the path control means, it is possible to adopt OSPF (Open Shortest Path First) to perform path control based on path costs. Additionally, it is possible to adopt the other path control protocols which are able to search paths based on link information.

In this connection, when computer control is implemented to achieve at least part of processes of constituent elements, included in the data communication device of the present invention, it is necessary to draft a program executing a path cost changing process which is illustrated using the flowcharts of Figs. 3A, 3B, and 4. This program may be distributed and stored in computer-readable storage media such as semiconductor memory, CD-ROM, and magnetic tapes. Additionally, a computer such as a microcomputer, a personal computer, and a general-purpose computer may read and execute programs in storage media.

### INDUSTRIAL APPLICABILITY

The present invention is applicable to data communication devices controlling communication path switching in association with an AMR function, thus masking it possible to select an optimum path while tracking variation of wireless bands not causing link disconnection.

### REFERENCE SIGNS LIST

- 1-4: data communication device
- 6-10: line
- 2-1, 3-1: wireless terminator (wireless line port)
- 2-2, 3-2: line terminator
- 2-3, 3-3: line terminator
- 2-4, 3-4: switch core
- 2-5, 3-5: path cost control device
- 2-6, 3-6: communication path control device
- 2-7, 3-7: wireless monitoring device
- 2-8, 3-8: switch
- 20: network

## Claims

1. A data communication device for performing path switching depending on path costs in a wireless communication network, said data communication device comprising:
a first path cost changing device for changing a current path cost with a first path cost, which is determined in advance for each wireless band discarding data, in a traffic change mode for changing path costs triggered by discarding data in wireless bands;and
a second path cost changing device for changing the current path cost with a second path cost, which is determined in advance, in a band change mode for changing path costs triggered by a variation of wireless bands.

2. The data communication device according to claim 1, wherein the first path cost changing device changes the current path cost with the first path cost when the current path cost differs from the first path cost, while the second path cost changing device changes the current path cost with the second path cost when the current path cost differs from the second path cost.

3. The data communication device according to claim 2, wherein the first path cost changing device changes the current path cost with the first path cost when the wireless band is recovered to a normal condition.

4. The data communication device according to claim 2, wherein the second path cost changing device changes the current path cost with the second path cost when the wireless band is reduced and smaller than a predetermined minimum guaranteed band.

5. The data communication device according to claim 2, wherein the second path cost changing process changes the current path cost with the second path cost when the wireless band is increased and larger than a predetermined recovery band.

6. A control method for a data communication device for performing path switching depending on path costs in a wireless communication network, said control method comprising the steps of:
setting either a traffic change mode for changing path costs triggered by discarding data in wireless bands or a band change mode for changing path costs triggered by a variation of wireless bands;
changing a current path cost with a first path cost, which is determined in advance for each wireless band discarding data, in the traffic change mode; and
changing the current path cost with a second path cost, which is determined in advance, in the band change mode.

7. A computer program describing a control procedure for a data communication device for performing path switching depending on path costs in a wireless communication network, said computer program comprising the steps of:
setting either a traffic change mode for changing path costs triggered by discarding data in wireless bands or a band change mode for changing path costs triggered by a variation of wireless bands;
changing a current path cost with a first path cost, which is determined in advance for each wireless band discarding data, in the traffic change mode; and
changing the current path cost with a second path cost, which is determined in advance, in the band change mode.
